# EUROPEAN PATENT APPLICATION

(11) **EP 3 069 642 A1**
(43) Date of publication of application: **21.09.2016**
(21) Application number: 16164074.3
(22) Date of filing: 24.12.2013
(51) Int. Cl.: A47J 37/10, A47J 36/38, A47J 36/06, A47J 27/00, A47J 36/08

(54) **COOKWARE SET FOR FRYING**

(30) Priority: 26.12.2012 US 201261746061 P
(62) Divisional of application: 13821614.8
(71) Applicant: Meyer Intellectual Properties Ltd., Vallejo, California 94590 (US)
(72) Inventor: CHENG, Stanley Kin Sui, Vallejo, CA California 94590 (US)
(74) Representative: Ferreccio, Rinaldo

(57) **Abstract**

A cookware set for frying includes annular trough that seats on the rim of a cookware vessel in which foodstuffs are fried in oil or fats. The vessel and trough are covered by a lid having a lower rim that descends into the annular trough, which during cooking contains water for condensing oil vapor escapes there from through either a plurality of holes or a scalloped or serrated edge at the bottom thereof where the lower rim is immersed within and rests on the bottom of the annular trough.

## Description

### CROSS REFERENCE TO RELATED APPLICATIONS

The present application claims the benefit of priority to the U.S. Provisional Patent Application of the same title that was filed on Dec. 26, 2012, having application Ser. No. 61/746,061, which is incorporated herein by reference.

### BACKGROUND OF INVENTION

The present invention relates to a cookware article, and in particular to a vessel and method of deep frying that reduces the release of oil odors.

Deep frying of food produces odor compounds from the oil or the food, depending on the particulars of the compositions of the foodstuff and frying fats/oils and the frying temperature. As such, the home use of deep frying is less popular unless conducted under a very strong exhaust hood.

Others have attempted to solve this problem in-home frying by providing specialized machines in which the headspace over the cooking oil is substantially sealed and exhaust vented through activated carbon filters. However, such equipment requires the periodic replacement of the filters, which a consumer can easily forget to do, and also takes up countertop space, which in many cases is undesirable.

Accordingly, it would be advantageous to provide an article of cookware capable of trapping the odors from frying with cooking oil without such specialized dedicated equipment, that would be more personal and allow for the use of the same cooking vessels and other modes when the capture of cooking oil paper is not required, as well as being simple to use on a stove top.

### SUMMARY OF INVENTION

In the present invention, the first object is achieved by providing a cookware set for frying, the set comprising a cookware vessel having; a substantially horizontal bottom, sidewalls extending upward from and connectedly encircling said bottom to form a fluid retaining interior region, the sidewall having an upper termination at a first rim, an annular trough connected to and surrounding the rim, the annular trough having a bottom disposed below the first rim and extending outward and upward to a second rim, a lid having a top surface and a surrounding downward descending wall connected to the top surface, the wall terminating at a lower rim, wherein the lower rim of the lid has a sufficient diameter to descend substantially to the bottom of the said annular trough, a plurality of holes in a first portion of the wall that is below the level of the first and second rim.

A second aspect of the invention is characterized by a cookware set for frying, the set comprising a cookware vessel having a substantially horizontal bottom, sidewalls extending upward from and connectedly encircling said bottom to form a fluid retaining interior region, the sidewall having an upper termination at a first rim, an annular trough having a bottom and upward extending sidewalls, including inner side wall that extends upward to form rim, and an outer sidewall that upward to from an outer second rim, in which the first and 2nd rim are laterally separated to provide in annulus capable of retaining fluid there between, in which the inner rim of the annular trough includes means for sealing engagement with the first rim of said cookware vessel, a lid having a top surface and a surrounding downward descending wall connected to the top surface, the wall terminating at a lower rim, wherein the lower rim of the lid has a sufficient diameter to descend substantially to the bottom of the said annular trough, a means for the escape of gas as bubbles within water contained within the trough in a first portion of the wall that is below the level of the first and second rim.

Another aspect of the invention is characterized by the cookware set for frying wherein said lid has a pair of handle disposed on opposing sides of the downward descending wall above the lower rim.

Another aspect of the invention is characterized by the cookware set for frying wherein said an annular trough has a pair of handle disposed on opposing sides of the outer sidewall.

Another aspect of the invention is characterized by the cookware set for frying wherein said an annular trough has a pair of handle disposed on opposing sides of the outer sidewall.

Another aspect of the invention is characterized by the cookware set for frying wherein the handle of the lid engage the handle of the trough to dispose the lower rim of the lid above the bottom of the trough.

The above and other objects, effects, features, and advantages of the present invention will become more apparent from the following description of the embodiments thereof taken in conjunction with the accompanying drawings.

### BRIEF DESCRIPTION OF DRAWINGS

FIG. 1 is a partial cross-sectional elevation view of the lid and cookware vessel in one embodiment of the invention.
FIG. 2A is a cross-sectional elevation of another embodiment of the lid and cookware vessel in which the lid is raised above the vessel, whereas FIG. 2B is an exterior elevation view of the embodiment of FIG. 2A with the lid resting on the cookware vessel.
FIG. 3 is a partial cross-sectional elevation view of the lid and cookware vessel in another embodiment of the invention.
FIG. 4A is a perspective exploded view of the components of another embodiment of the cookware vessel for frying, whereas FIG. 4B is a cross-sectional elevation thereof.
FIG. 5A is an enlarged cross sectional elevation of an embodiment of the lid and trough details from FIG. 4.
FIG. 5B is an enlarged cross-sectional elevation of the lid and vessel rim details in an alternative deployment of the cookware vessel and lid without the trough.
FIG. 5C is a partial perspective view of an embodiment of the lid in FIGS. 4 and 5A-B.
FIG. 5D is a partial perspective view of another embodiment of the lid.
FIG. 6A is a cross-sectional elevation of another embodiment of the lid and cookware vessel with the lid and trough resting on the cookware vessel.
FIG. 6B is an exterior elevation view of the embodiment of FIG. 6A with the trough is raised above the vessel along with the lid disposed on the trough.
FIG. 7A-C illustrate another embodiment of the trough of FIG. 6, in which FIG. 7A is a cross-sectional elevation, FIG. 7B is a side exterior elevation and FIG. 7C is a top plan view of another embodiment of the trough.
FIG. 8A is a top plan view of the lid as disposed on the trough in a preferred embodiment corresponding to FIGS. 6A and 6B, whereas FIG. 8B-8E illustrate alternative embodiment for the vapor sealed connection of the trough to the rim when the trough is separable from the vessel for removal of the lid and the trough together.

### DETAILED DESCRIPTION

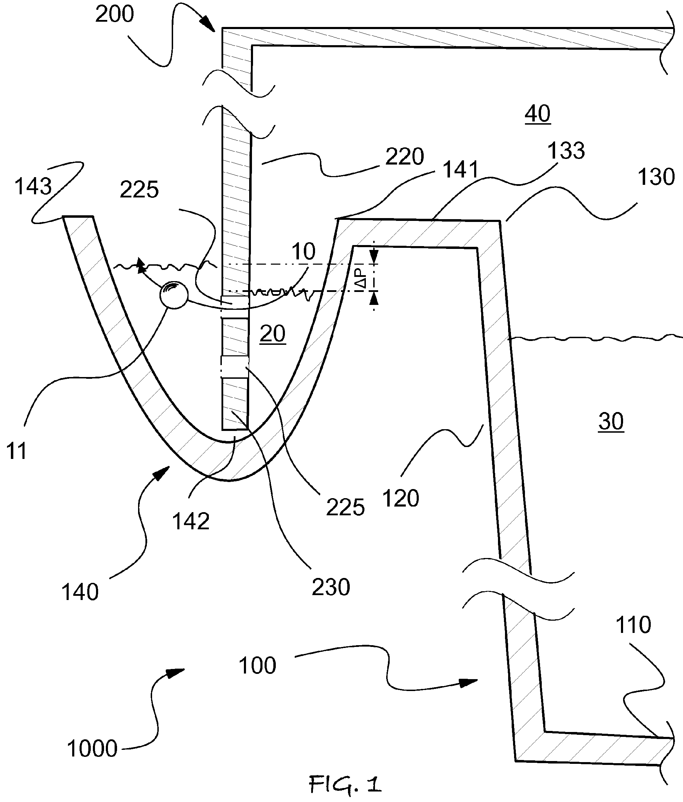

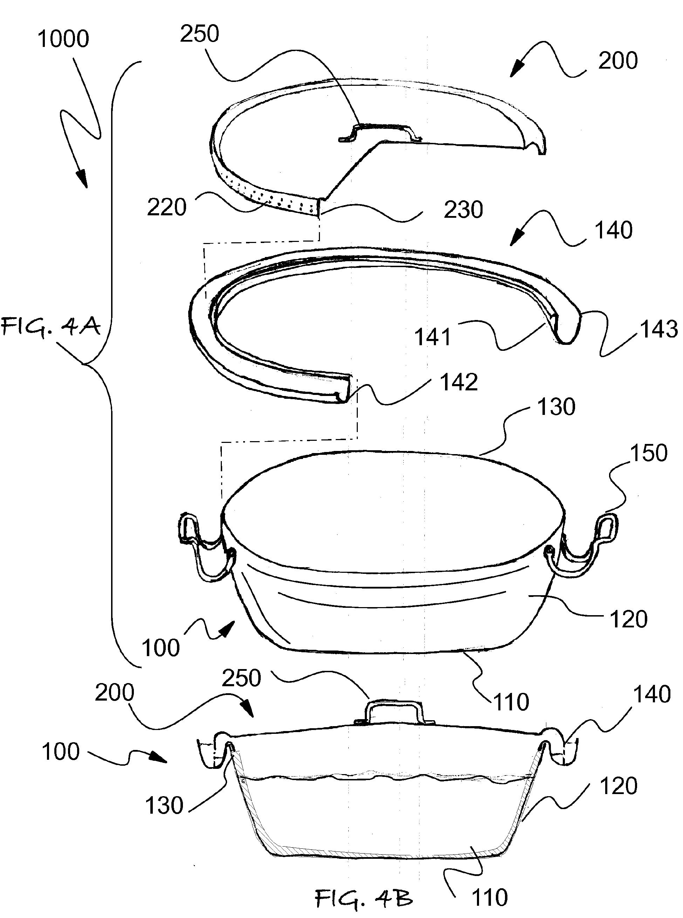

Referring to FIGS. 1 through 8, wherein like reference numerals refer to like components in the various views, there is illustrated therein a new and improved cookware set for frying, generally denominated 1000 herein.

In accordance with the present invention, cookware set for frying comprises at least 2 components, a vessel 100 and a lid 200. The vessel 100 has a bottom 110 and connected surrounding sidewalls 110 that extend generally upward to terminate at rim 130 to provide a volume for containing fluid. The vessel 100 has an annular trough 140 which extends outward laterally from the annulus of attachment to rim 130. The annular trough 140 has a bottom 142 disposed between sidewalls that extend upward there from to terminate at an inner annular edge 141 and an outer annular edge 143 and is thus contains fluid 20, usually water, within annular volume therein. The inner annular edge 141 is optionally separated from rim 130 by a generally laterally extending flange 133. However, the flange 133 can tilt upward or downward as it extends away from rim 130, thus placing the inner annular edge 141 either above or below the height of rim 130.

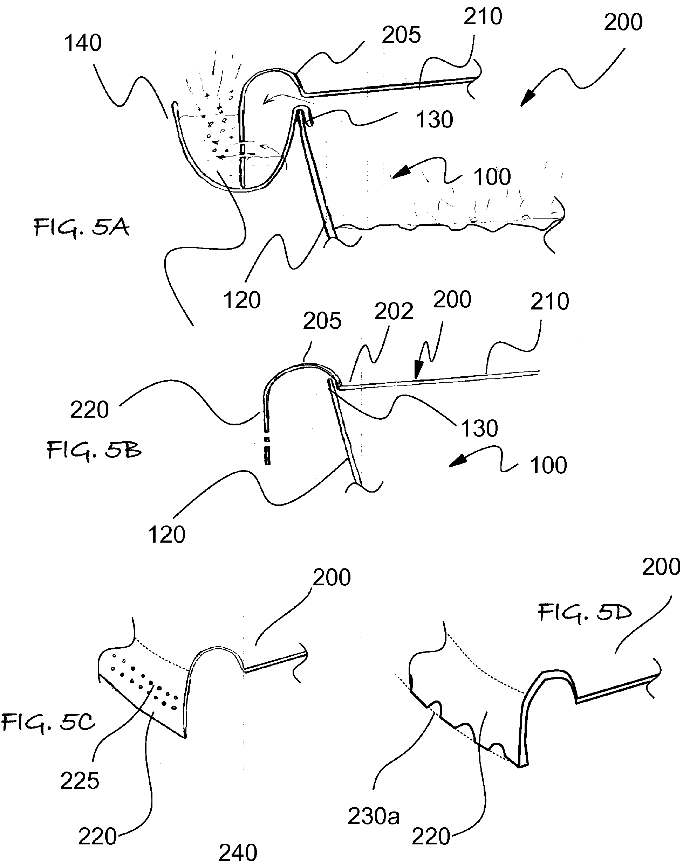

The lid 200 has at least an outer portion that extends beyond the confines of cookware vessel rim 130 and is adapted to seal the top of vessel 100 at the bottom or lower rim 230 of its generally downward descending wall 220. The lower rim 230 has a sufficient diameter to seat within the annular trough 140, between the inner annular edge 141 and the outer annular edge 143 so that it is preferably disposed proximal to the bottom 142 of the annular trough 140. Further, preferably at or just above rim 230 are a plurality of holes or apertures 225, and optionally a scalloped edge 230a (FIG. 5D). The holes 225 however are formed in a region sufficiently below inner annular edge 141 and an outer annular edge 143 so that water 20 in the trough 140 will be above these holes or apertures 225 to serve as a filtering medium for escaping vapor. Hence, when vessel 100 is filled with oil 30 and any foodstuffs to be cooked therein, the heating of oil 30 during cooking increases the vapor pressure within headspace 40 (above oil 30 and below lid 200) beyond atmospheric pressure, which then depresses the level of fluid 20 on the inboard side of the trough that is closer to inner edge 141. It should be appreciated that the vapor in headspace 40 is likely to be mostly moist air with mixed with oil vapor, as well as any volatile oil decomposition products. The change in fluid depth caused by this pressure differential is indicated as .DELTA.P in FIG. 1. Once the pressure differential increases to the point at the fluid level is depressed to holes 225, this oil saturated vapor would escape by passing through these holes 225, via arrow 10, exiting as small bubbles 11 through water 20 on the outward side of trough 140 between lid wall 220 and outer annular edge 143. The water 20 in trough 140 rapidly cools the small bubbles 10, which condenses the oil vapor products therein and thus trapping them as liquid within trough 140. Hence, the water 20 in trough 140 prevents the escape of odor causing volatile compounds to atmosphere outside the cooking vessel 100 and cookware set 1000.

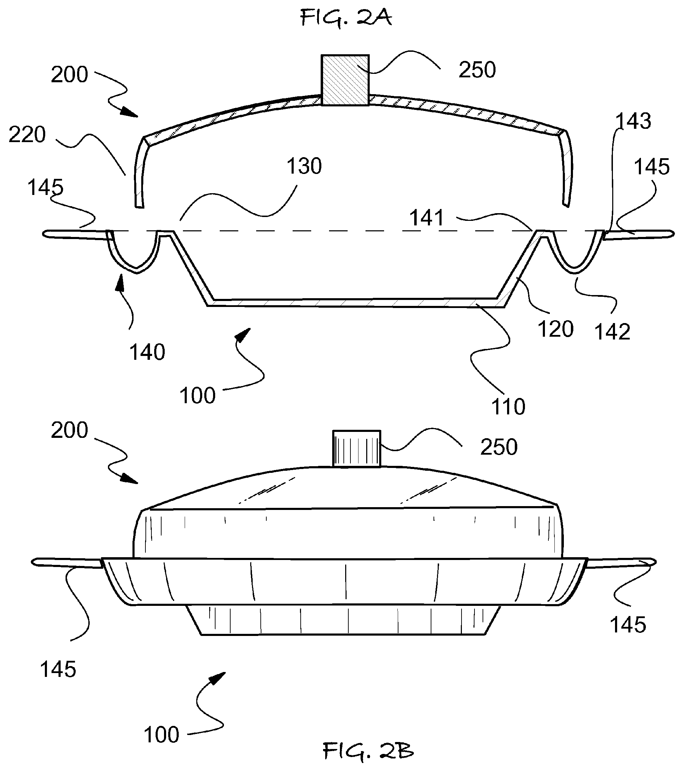

Lid 200 can be removed from the trough 140 and cookware vessel 100 by lid handle 250 (FIG. 2), which is preferably attached to the center of lid 200. Likewise, vessel 100 can also be grasped by one or more side handles 150 that are connected to outer wall 120.

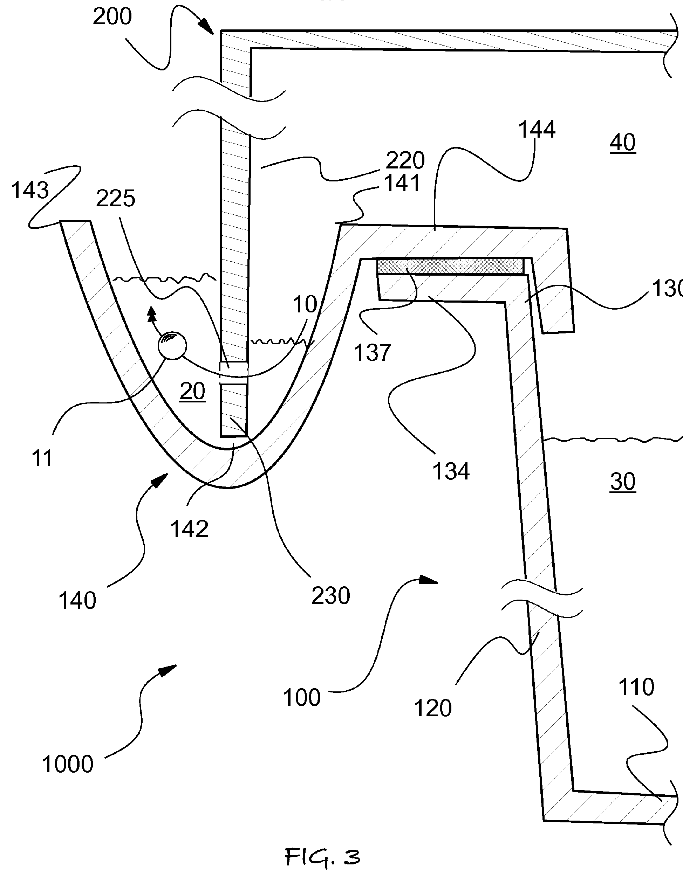

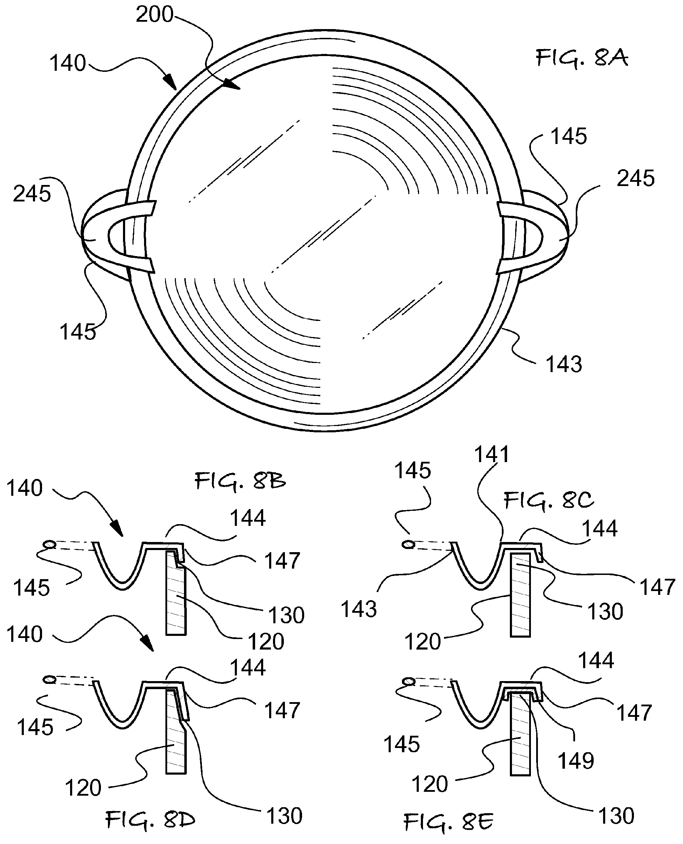

The annular trough 140 can be an integral part of the vessel 100, as shown in FIG. 1, or a separable component 140 (FIG. 3-8) when provisioned as an additional component of a kit or cookware set 1000. In either case, the trough 140 has an inner annular upper rim 141 that is coupled to the rim 130 of vessel 100, and an outward annular rim 143, with the bottom 142 of trough 140 disposed there between. When trough 140 is a separable component it is preferable that the weight of the lid 200 and water filled trough 140 is sufficient to also provide a sealed attachment of at least a portion annular trough to the rim 130 of the cookware vessel 100. This can be achieved by several means including providing an outward flat annular flange 134 that is connected to rim 130, with trough 140 having a corresponding inner annular flange 144 intended for sealed engagement thereto by overlap, such as shown in FIG. 2. This sealing surface at this overlap can include an optional elastic coating or cover, such as a silicone rubber layer 137 which is operationally attached to one of the annular trough or the cookware vessel at the rim 130 or flange 134. It should be appreciated that other complementary shapes and surface finishes can be used to provide a vapor seal between separable trough 140 and the rim 130 of cookware vessel 100. For example, trough 140 can be constructed from somewhat elastic silicone rubber and being at least conformable readily to form a seal to both rim 130 and trough 140. FIG. 8B-8E illustrates alternative examples of the sealable connection between vessel rim 130 and the annular trough 140.

As shown an alternative embodiment of the invention in FIG. 5A-D, the lid 200 can also be configured to sealing edge the rim 130 of the vessel 100 even when annular trough 140 is removed. This is achieved by lid 200 having a substantially horizontal covering region 210 connected to the lower descending wall 220 region by an upward arching annular portion 205 that extends outward before descending downward as wall 220. When the lower rim 230 of wall 220 is disposed to be supported by the bottom of trough 140 to horizontal covering portion 210 of lid 200 extends above the rim 130 a vessel 100. However, as shown in FIG. 5B, when trough 140 is removed, the first part 202 of arching annular portion 205 can seat within rim 130 of vessel 100 forming a removable sealed there with.

It should be appreciated from FIGS. 5C and 5D that the lower descending wall 220 of lid 200 can include either a plurality of holes 225 which forced oil saturated vapor to exit there from into the surrounding water 20 in trough 140 as small bubbles, as shown in FIG. 5C, or via the serrated or scalloped edge 230, as shown in FIG. 5D.

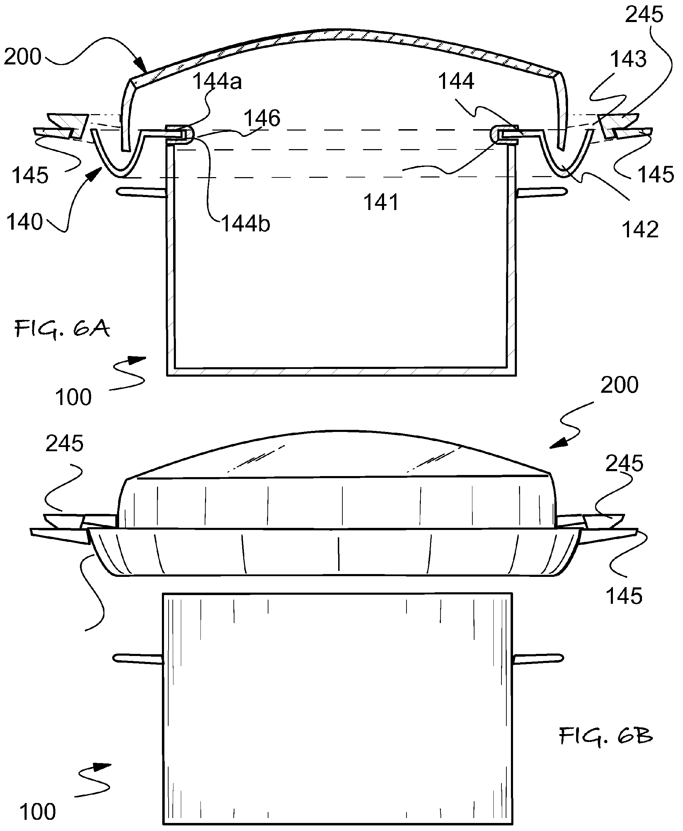

FIG. 6-8 illustrate more preferred embodiments of the invention in which the lid 200 has a plurality of side handles 245 on opposing sides that facilitate removal of the lid and the trough together as a unit after cooking is complete. By removing the lid and trough together as a unit there is no possibility that water from the trough would be retained on the edge of the lid and drip into the hot oil in the vessel.

The handles 245 of the lid 200 can be supported by the handles 145 of the trough 140 to limit the depth at which the skirt 220 of the lid 200 enter the trough 140, controlling its relative displacement from the bottom 142 thereof.

In FIG. 6A, the trough seals with the rim 130 the vessel 100 by an annular U shaped gasket 146 that cover the upper 144a and lower 144b surface of the inner annular flange 144.

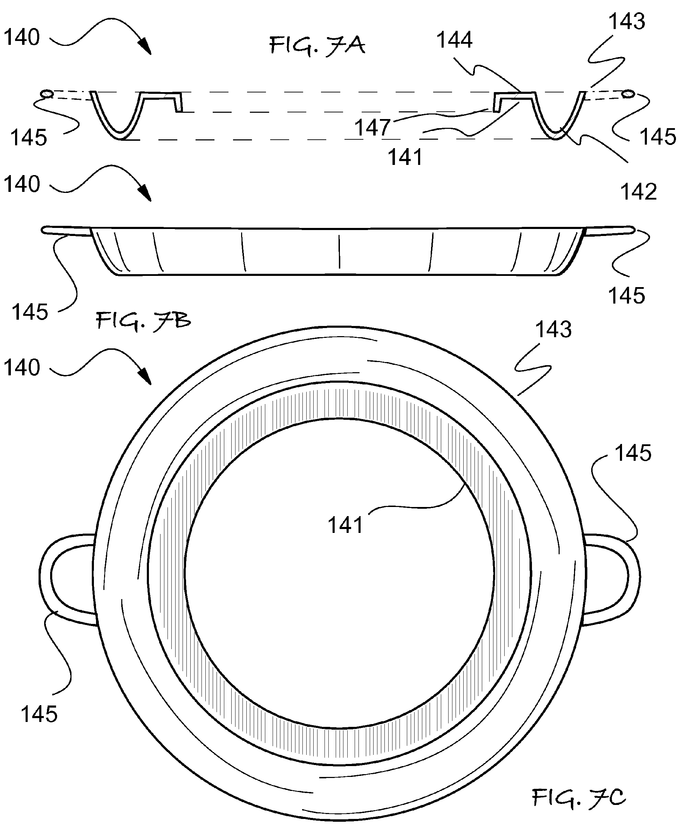

In FIG. 7A the inner annular flange 144 of the trough 140 has an inner descending skirt 147 for entry below the vessel rim 130 to facilitate centering the trough in the vessel.

In the alternative embodiment of FIGS. 8B and 8D, the rim 130 has an inner bevel or frusto-conical shape to receive the similarly angled descending skirt 147 to form a seal with the trough 140.

In the alternative embodiment of FIG. 8E, an inverted U-shaped gasket 149 is disposed over rim 130 to seal with flange 144 of trough 140.

In the alternative embodiment of the trough 140 illustrated in FIG. 8A-C, it can be raised and lowered from the vessel rim 130 by side handles 145 while retaining the position of the lid 200.

It should be appreciated by reference to the various embodiments illustrated and described herein that vessel 100 can be shallow or deep, relative to the diameter, independent of the attachment of trough 140 or the separate provision as a kit or accessory with lid 200. Lid 200 preferably is clear being formed of glass, with a metallic skirt 220 having holes 225.

While the invention has been described in connection with a preferred embodiment, it is not intended to limit the scope of the invention to the particular form set forth, but on the contrary, it is intended to cover such alternatives, modifications, and equivalents as may be within the scope of the invention as defined by the appended claims.

## Claims

1. A cookware set (1000) for frying, the set comprising:
a) a cookware vessel (100) having
i) a substantially horizontal bottom (110),
ii) sidewalls (120) extending upward from and connectedly encircling said bottom (110) to form a fluid retaining interior region, the sidewall having an upper termination at a first rim (130),
iii) an annular trough (140) connected to and surrounding the first rim (130), the annular trough having a bottom (142) disposed below the first rim (130) and a connecting surrounding sidewall extending outward and upward to a second rim (143),
b) a lid (200) having a top surface and a surrounding downward descending wall (220) connected to the top surface, the wall terminating at a lower rim (230),
c) wherein the lower rim of the lid has a sufficient diameter to descend substantially to the bottom (142) of the said annular trough (140),
**characterized by** a plurality of holes (225) in a first portion of the downward descending wall (220) that is below the level of the first (130) and second (143) rim.

2. The cookware set for frying according to claim 1, wherein said lid (200) has a pair of handles (245) disposed on opposing sides of the downward descending wall (220) above the lower rim (230).

3. The cookware set for frying according to claim 1, wherein said an annular trough (140) has a pair of handles (145) disposed on opposing sides of the outer sidewall.

4. The cookware set for frying according to claim 2, wherein said an annular trough (140) has a pair of handles (145) disposed on opposing sides of the outer sidewall.

5. The cookware set for frying according to claim 4, wherein the handles (245) of the lid (200) engage the handles (145) of the trough (140) to dispose the lower rim (230) of the lid above the bottom (142) of the trough.
